# FASCICULE DE BREVET EUROPEEN

(11) **EP 1 799 532 B1**
(45) Date de publication et mention de la délivrance du brevet: **14.05.2008**
(21) Numéro de dépôt: 05802563.6
(22) Date de dépôt: 14.09.2005
(51) Int. Cl.: B62H 3/04

(54) **DISPOSITIF DE MAINTIEN DE ROUE DE MOTO ET BANC DE TEST DE MOTOS**
VORRICHTUNG ZUM WARTEN EINES MOTORRADRADS UND MOTORRADPRÜFSTAND
DEVICE FOR MAINTAINING A MOTORCYCLE WHEEL AND MOTORCYCLE TEST STAND

(30) Priorité: 14.09.2004 FR 0409708
(43) Date de publication de la demande: 27.06.2007
(73) Titulaire: Fuchs, Daniel, 34200 Sete (FR)
(72) Inventeur: Fuchs, Daniel, 34200 Sete (FR)
(74) Mandataire: Ravina, Bernard
(86) Numéro de dépôt international: PCT/FR2005/002291
(87) Numéro de publication internationale: WO 2006/030135

(56) Documents cités:
- FR-A- 2 711 346
- PATENT ABSTRACTS OF JAPAN vol. 2002, no. 08, 5 août 2002 (2002-08-05) -& JP 2002 104260 A (TOSHI KAIZOU SYSTEM KK), 10 avril 2002 (2002-04-10)
- PATENT ABSTRACTS OF JAPAN vol. 2000, no. 11, 3 janvier 2001 (2001-01-03) & JP 2000 213195 A (TOSHI KAIZOU SYSTEM KK), 2 août 2000 (2000-08-02)

## Description

La présente invention concerne un dispositif de maintien de roue de moto et un banc de test de motos. Elle s'applique, en particulier, aux tests de motos effectués par les motocistes, par exemple le test de puissance de moteur des motos.

On connaît de nombreux dispositifs de test de motos et de nombreux systèmes de fixation de roue avant de moto. Par exemple, le brevet FR 93 13228 (correspondant au FR2711346 qui d'écrit l'état de la technique le plus proche) présente un système de fixation de roue sur un socle et les brevets FR 93 12772 et FR 95 15612 présentent un banc de test de moto. Cependant, le système de fixation exposé par le premier document ne permet pas de tenir la roue avant de toute la gamme des roues des deux-roues du marché En effet, en dessous-d'un diamètre de jante d'environ 15 pouces, il est nécessaire d'ajouter un accessoire mécanique pour que le système puisse brider la roue.

De plus, ce système nécessite l'usage d'une force motrice, par exemple un vérin, pour brider la roue, ce qui augmente le prix de revient, les coûts d'utilisation et de maintenance du système et les risques de panne.

La présente invention vise à remédier à ces inconvénients. En particulier, la présente invention vise un dispositif capable, par son principe, de brider les roues, par exemple de 10 à 21 pouces de diamètre, sans ajout d'accessoire.

À cet effet, la présente invention vise, selon un premier aspect, un dispositif de maintien de roue avant de moto comportant:
- un support inférieur pour constituer une zone d'appui central ;
- un support avant qui est adapté à reculer lorsque la roue avant s'engage dans le dispositif et appuie sur le support avant, pour constituer une zone d'appui avant ;
- un support arrière qui est adapté à remonter en appui sur l'arrière de la roue lorsque celle-ci s'engage dans le dispositif, pour constituer une zone d'appui arrière et
- un moyen de blocage adapté à bloquer le support avant lorsque le support arrière a atteint une position prédéterminée.

Grâce à ces dispositions, pour brider la roue avant, c'est-à-dire la maintenir en position, l'utilisateur fait rouler la roue avant, l'engage dans le support inférieur, puis elle pousse le support avant, ce qui entraîne une remontée du support arrière jusqu'à la position prédéterminée (par la cinématique du dispositif). La roue avant de la moto est alors tenue par trois zones, ce qui assure son maintien stable. On rappelle qu'un maintien avec seulement deux zones risquerait de provoquer un jeu par rapport à l'axe passant par ces deux zones, ce qui serait dangereux pour l'utilisateur et des efforts de torsion sur ces deux zones d'appui et, en conséquence, de voiler la roue avant ou, en tous cas, de la détériorer.

De plus, aucune force motrice n'étant nécessaire, le dispositif présente un faible risque de panne et un coût d'utilisation moindre.

Selon une autre caractéristique de l'invention, le support inférieur, le support avant, le support arrière et le moyen de blocage sont montés sur un châssis commun.

Selon une autre caractéristique de l'invention, le support avant est monté en coulissement sur deux coulisses de guidage.

Selon une autre caractéristique de l'invention, le support avant est doté d'une platine, fixée rigidement audit support, ledit support étant monté en coulissement sur deux coulisses de guidage par l'intermédiaire de ladite platine.

Selon une autre caractéristique de l'invention, les coulisses sont solidaires du châssis.

Selon une autre caractéristique de l'invention, la platine comporte deux bras de guidage qui assurent aussi le guidage de la platine, l'un des bras de guidage étant équipé d'un galet.

On observe que les supports inférieur, avant et arrière présentent préférentiellement une section en Vé de telle manière que la roue avant est tenue en position par trois zones latérales sur chacun de ses côtés.

Selon des caractéristiques particulières, le support arrière présente un axe de rotation et une longueur adaptés à ce que, pour les diamètres de roue entre dix et vingt et un pouces, lorsque la roue est bloquée dans le dispositif, l'angle, par rapport à l'horizontale, de l'axe passant par le centre de la roue et la zone d'appui arrière est inférieur à trente degrés.

Grâce à ces dispositions, même en cas de blocage de la roue arrière de la moto, qui entraîne que la moto soit violemment tirée vers l'arrière, la roue avant ne risque pas de sortir du dispositif de maintien.

Selon une autre caractéristique de l'invention, le support arrière est constitué d'un support de section en Vé ouvert vers la roue avant, qui est articulé sur le châssis par deux bras en rotation autour d'un axe de rotation qui est en avant de la roue avant et, au dessus du support et en avant du support avant.

Selon une autre caractéristique de l'invention, le support arrière comporte au moins un levier qui sert de support pour accrocher deux ressorts reliés au châssis par leurs autres extrémités, par l'intermédiaire d'une patte.

Selon une autre caractéristique de l'invention un loquet de maintien du support arrière solidaire du châssis lequel loquet se bloque lors du retour vers l'arrière des parties mobiles pour maintenir en position basse le support arrière, ledit loquet étant libéré sous l'effet du poids de la roue avant, lois de l'introduction de la roue dans ledit dispositif.

Selon des caractéristiques particulières, le moyen de blocage qui bloque le support avant comporte au moins une pièce adaptée à se coincer en arc-boutement.

Grâce à ces dispositions, la roue avant ne risque pas de sortir du dispositif de maintien lorsque la moto est tirée vers l'arrière, par exemple lorsque l'utilisateur actionne le frein arrière de la moto en cours de test.

Selon une autre caractéristique de l'invention, farc-boutement a lieu lorsque le support arrière remonte suffisamment haut pour que l'un de ses bras, par action de poussée radiale vers le haut sur le galet, provoque le basculement-de la platine.

Selon une variante d'exécution, le support avant est guidé sur ses coulisses sans possibilité de basculer par rapport à ces dernières afin d'éviter toute possibilité d'arc-boutement sur ces dernières, et ledit support avant est solidarisé un moyen de blocage le long des coulisses, ce moyen de blocage étant actionné dans le sens du blocage par le support arrière lors de la remontée de ce dernier.

La présente invention vise aussi un banc de test de moto comportant un dispositif de maintien de roue avant de moto comportant :
- un support inférieur pour constituer une zone d'appui central,
- un support avant qui est adapté à reculer lorsque la roue avant s'engage dans le dispositif et appuie sur le support avant, pour constituer une zone d'appui avant,
- un support arrière qui est adapté à remonter en appui sur l'arrière de la roue lorsque celle-ci s'engage dans le dispositif, pour constituer une zone d'appui arrière et
- un moyen de blocage adapté à bloquer le support avant lorsque le support arrière a atteint une position prédéterminée.

Les avantages, buts et caractéristiques particulières de ce banc de test étant similaires à ceux du dispositif de maintien tel que succinctement exposé ci-dessus, ils ne sont pas rappelés ici pour des raisons de concision.

Selon une autre caractéristique de l'invention le banc de test est doté d'au moins deux rails parallèles, fixes, horizontaux, sur lesquels est monté en coulissement le dispositif de maintien de la roue avant, un organe élastique tendant à s'opposer au déplacement du dit dispositif vers l'avant étant interposé entre le banc et ledit dispositif, de façon que ledit dispositif ne puisse se déplacer sur les rails qu'après verrouillage de la roue avant, le maintien dudit dispositif dans la position longitudinale appropriée étant assurée par un doigt mobile qui lui est solidaire et qui est manoeuvré par une pédale et qui est destiné, par action sur la pédale à venir se loger dans un trou formé dans un élément à trous que comporte le banc.

Les systèmes de l'art antérieur présentent un autre inconvénient. La protection arrière, qui est constituée de la rampe arrière relevée, est susceptible d'être dotée, sur sa face avant, de bouches d'extraction de gaz d'échappement. Cependant, lorsque les silencieux de la moto sont très longs, il n'y a pas assez de place pour positionner ces bouches d'extraction. Si, par construction, on écarte la protection arrière de la moto, le problème inverse se présente pour les motos qui ont des silencieux courts qui sont alors trop éloignés des bouches d'extraction. De plus, l'emprise et l'encombrement du banc de test sont alors augmentés.

Un deuxième aspect de la présente invention vise à remédier à ces inconvénients. À cet effet, selon un deuxième aspect, la présente invention vise un banc de test de motos comportant une rampe d'accès mobile percée d'ouvertures et un support de bouche d'extraction adapté à recevoir au moins une bouche d'extraction en regard d'au moins une ouverture de la rampe d'accès pour recevoir les gaz d'échappement à travers de ladite ouverture lorsque la rampe est relevée.

Grâce à ces dispositions, chaque bouche d'extraction peut être positionnée à l'arrière de la rampe d'accès, ce qui lui permet de capter les gaz d'échappements des silencieux les plus longs.

Selon des caractéristiques particulières, la rampe d'accès comporte une partie en caillebotis et chaque bouche d'extraction est munie d'au moins un crochet adapté à s'accrocher audit caillebotis.

Grâce à ces dispositions, les bouches d'extraction peuvent être positionnées en regard des silencieux, en tous points du caillebotis de la rampe d'accès.

Selon des caractéristiques particulières, le caillebotis comporte des plaquettes inclinées par rapport à la perpendiculaire au caillebotis de manière à ce que les gaz d'échappement traversant le caillebotis soient rabattus vers le sol.

Selon des caractéristiques particulières, la rampe d'accès comporte une partie en grillage et chaque bouche d'extraction est munie d'au moins un crochet adapté à s'accrocher audit grillage.

Grâce à ces dispositions, les bouches d'extraction peuvent être positionnées en regard des silencieux, en tous points du grillage de la rampe d'accès.

Selon des caractéristiques particulières, chaque bouche d'extraction comporte au moins un crochet sur sa face avant et au moins un crochet sur sa face arrière.

Grâce à ces dispositions, chaque bouche d'extraction peut être positionnée, au choix de l'utilisateur, devant ou derrière la rampe d'accès afin de s'adapter à la longueur des silencieux.

Dans le système de banc de test de l'art antérieur exposé ci-dessus, les gaz d'échappement mélangés à de l'air servent à refroidir le rouleau de roulage de la roue arrière de la moto. Ce qui présente un inconvénient : le gaz de refroidissement est gras et chaud.

Un troisième aspect de la présente invention vise à remédier à ces inconvénients. À cet effet, la présente invention vise, selon un troisième aspect, un banc de test de moto comportant :
- un circuit de récupération de gaz d'échappement,
- un circuit de refroidissement d'un rouleau de roulage de la roue arrière de la moto,
- une chambre de mélange des gaz d'échappement et de l'air de refroidissement du rouleau placé en aval desdits circuits et,
- un extracteur de gaz adapté à extraire les gaz de la chambre de mélange de gaz.

Grâce à ces dispositions, l'air de refroidissement du rouleau est frais et un seul extracteur permet d'extraire, simultanément, à la fois les gaz d'échappement et l'air de refroidissement, ce qui réduit les coûts et les risques de panne du banc de test.

Selon des caractéristiques particulières, le circuit de refroidissement du rouleau comporte une première entrée d'air d'un côté du rouleau et une sortie d'air diamétralement opposé à l'entrée d'air, par rapport au rouleau.

Grâce à ces dispositions, l'efficacité du circuit de refroidissement est augmentée.

Selon des caractéristiques particulières, le banc de test comporte un moyen de modulation adapté à faire varier le rapport des débits de gaz circulant dans les circuits de récupération de gaz et de refroidissement du rouleau.

Grâce à ces dispositions, lorsque la moto émet beaucoup de gaz d'échappement, une grande quantité de gaz d'échappement peut être récupérée et lorsque la moto émet peu de gaz d'échappement, le refroidissement du rouleau peut être privilégié.

Selon des caractéristiques particulières, le moyen de modulation comporte un volet placé dans la chambre de mélange.

Selon des caractéristiques particulières, le moyen de modulation comporte un volet placé dans l'un des circuits de gaz;

Selon des caractéristiques particulières, le banc de test comporte un moyen de commande du moyen de modulation en fonction de la vitesse de rotation du rouleau et/ou en fonction de l'accélération de la vitesse de rotation du rouleau et/ou en fonction de la position du frein du rouleau et/ou de l'effort fourni par la moto.

Grâce à ces dispositions, la commande du moyen de modulation est automatique.

Selon une autre caractéristique de l'invention, le moyen de commande du moyen de modulation comprend:
- l'élément à trous, lequel est monté coulissant longitudinalement dans le banc selon une course faible,
- un câble solidaire d'une part du volet et d'autre part de l'élément à trous et,
- un ressort de traction agissant sur le volet afin de tendre le câble et de solliciter ledit volet vers une position d'obturation totale ou quasi totale du circuit d'aspiration des gaz d'échappement, ladite position correspondant à une position d'ouverture totale quasi totale du circuit d'aspiration d'air dans le circuit de refroidissement.

Dans le système de banc de test de l'art antérieur exposé ci-dessus, l'arrêt d'urgence du rouleau est effectué par le biais d'une électrovanne qui met en action un frein de rouleau de roulage de la roue arrière de la moto. Ce type d'arrêt d'urgence est coûteux et nécessite une maintenance coûteuse.

Un quatrième aspect de la présente invention vise à remédier à ces inconvénients. À cet effet, la présente invention vise, selon un quatrième aspect, un banc de test de motos qui comporte une rampe d'accès de la moto, un frein de rouleau de roulage de la roue arrière de la moto, un lien mécanique entre la rampe d'accès et le frein et un système de retenue de la rampe d'accès comportant un bouton d'arrêt d'urgence adapté, lorsque le bouton d'arrêt d'urgence est actionné, à libérer le système de retenue de la rampe, le centre de gravité de la rampe étant placé de telle manière qu'elle se rabat lorsqu'elle est libérée.

Grâce à ces dispositions, lorsque le bouton d'arrêt d'urgence est actionné, la rampe n'est plus retenue et, sous l'action de son poids, elle redescend et actionne le frein de rouleau. Le coût du banc est donc réduit ainsi que le risque de panne et le coût de maintenance du banc.

Selon des caractéristiques particulières, le lien mécanique entre la rampe d'accès et le frein du rouleau comporte un ressort à gaz. Grâce à ces dispositions, la force exercée par le frein est constante tout en permettant à la rampe d'accès de redescendre lentement vers sa position d'appui sur le sol, lorsque l'opérateur souhaite redescendre cette rampe d'accès.

Selon des caractéristiques particulières, le système de retenue de la rampe d'accès comporte une crémaillère dans laquelle est enclenché, en remontant, un bras relié mécaniquement à la rampe d'accès.

Grâce à ces dispositions, l'arrêt d'urgence est simple et fiable : en appuyant sur le bouton d'arrêt d'urgence, on désenclenche le bras relié à la rampe d'accès, ce qui la libère et, sous l'effet de son poids, provoque le freinage du rouleau.

Dans le système de banc de test de l'art antérieur exposé ci-dessus, le contrôle de l'alignement des roues avant et arrière de la moto est effectué grâce à une rainure faite dans le rouleau de roulage de la roue arrière, dans le plan de symétrie du moyen de maintien de la roue avant. Au cours du roulage de la roue arrière, et sur la circonférence de la roue arrière, en regard de la rainure, le pneu arrière reste sale alors qu'il est partiellement nettoyé sur le reste de sa surface. Ce système présente des inconvénients. Lorsque l'on accélère avec une moto dont les roues ne sont pas parallèles, la roue arrière se déplace latéralement sur le rouleau, empêchant la lecture du défaut d'alignement car ce déplacement nettoie la partie du pneu jusqu'alors restée sale et provoque l'effacement de la trace. De plus, la vérification de l'alignement nécessite l'arrêt de la moto et, éventuellement l'abaissement de la rampe d'accès.

Le cinquième aspect de la présente invention vise à remédier à ces inconvénients. À cet effet, la présente invention vise, selon un cinquième aspect, un banc de test de moto qui comporte un capteur de déplacement latéral de la roue arrière.

Grâce à ces dispositions, en appliquant une accélération de la vitesse de rotation de la roue arrière de la moto, le capteur de déplacement latéral indique si l'alignement des roues est incorrect ou non, selon que la roue se déplace latéralement, ou non, sans que l'utilisateur n'ait à descendre de la moto.

Selon des caractéristiques particulières, le capteur de déplacement latéral de la roue arrière comporte un capteur électronique.

Selon des caractéristiques particulières, le capteur de déplacement latéral de la roue arrière comporte deux capteurs électroniques et un moyen de mesure de différence entre les mesures effectuées par lesdits capteurs. Grâce à ces dispositions, le capteur de déplacement fournit une bonne précision de mesure, quelle que soit la largeur de la roue arrière ou de son pneu.

Les avantages, buts et caractéristiques de chaque aspect de la présente invention se combinent à ceux des autres aspects pour former un banc de test de moto présentant de nombreuses caractéristiques et de nombreux avantages par rapports aux bancs de test de l'art antérieur.

D'autres avantages, buts et caractéristiques de la présente invention ressortiront de la description qui va suivre, faite, dans un but explicatif et nullement limitatif, en regard des dessins annexés dans lesquels :
- la figure 1 est une vue en élévation partielle, un dispositif de maintien de roue avant au début de l'introduction de la roue avant, selon un mode de réalisation particulier,
- la figure 2 est une vue en élévation partielle, le dispositif de maintien de roue illustré en figure 1, à la fin de l'introduction de la roue avant, selon un mode de réalisation particulier,
- la figure 3 est une vue en perspective partielle, le dispositif de maintien de roue illustré en figures 1 et 2, à la fin de l'introduction de la roue avant,
- la figure 4 est une vue en perspective d'un banc de test de motos, selon un mode particulier de réalisation,
- la figure 5 est une vue en perspective, partielle d'une rampe d'accès de banc de test munie de bouches d'extraction de gaz d'échappement, selon un mode particulier de réalisation,
- la figure 6 est une vue en perspective, d'un circuit de gaz de banc de test, selon un mode particulier de réalisation,
- la figure 7 représente, schématiquement, en élévation, un système d'arrêt d'urgence selon un mode de réalisation particulier et,
- la figure 8 représente, schématiquement, en vue de dessus, un système de mesure d'alignement de roues, selon un mode de réalisation particulier,
- la figure 9 représente schématiquement une variante d'exécution du moyen de blocage du support avant du dispositif de maintien de la roue avant,
- la figure 10 est une vue de dessus d'une variante d'exécution du support avant.

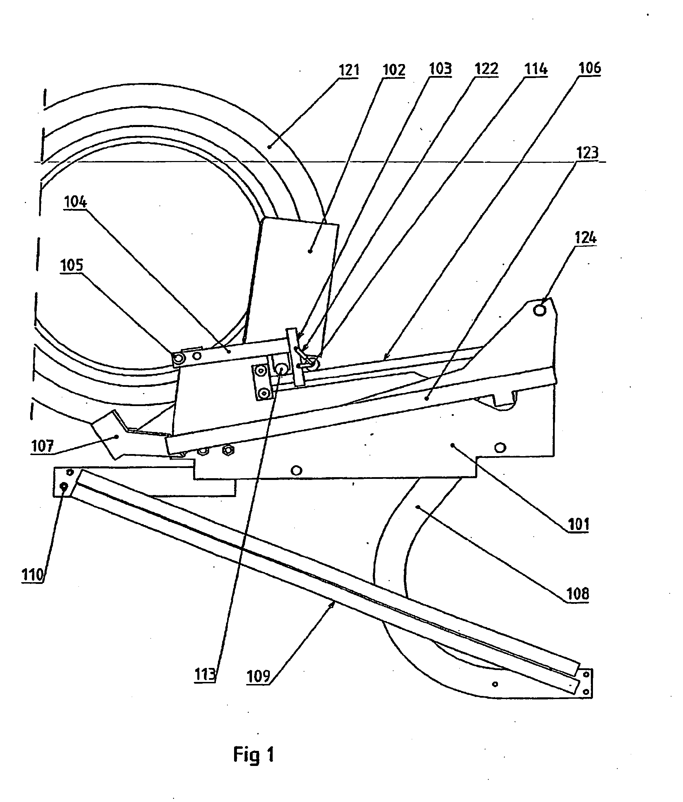

On observe, en figure 1, que, dans le mode particulier de réalisation illustré aux figures 1 à 3, le dispositif de maintien, ou de fixation, de roue avant 121 de moto comporte trois parties.

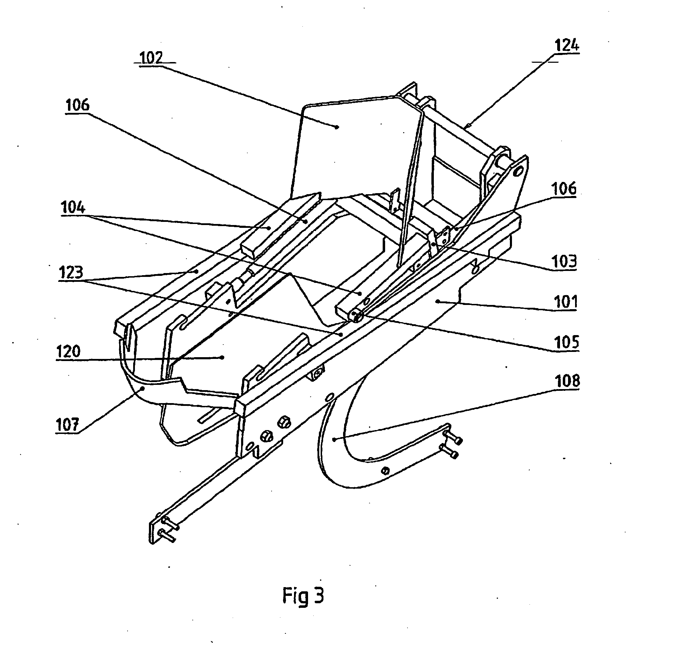

Un châssis 101 relie les autres parties entre elles et comporte un support inférieur 120 (mieux visible en figure 3) de roue comportant une bande de roulage en rail longitudinal dont la section est en Vé.

Un support avant 102 possède une section en Vé ouvert vers la roue avant 121. Ce support avant 102 est solidaire d'une platine 103 qui coulisse sur deux coulisses 106 solidaires du châssis 101. Le coulissement de la platine 103 sur les coulisses 106 se fait par guidage, les coulisses 106 traversant la platine 103, et par roulage de la platine 103 sur les coulisses 106. Ce roulage se fait par l'intermédiaire d'au moins une roulette fixe 113 et d'au moins une roulette articulée 114, de chaque côté de la roue, c'est-à-dire sur chaque coulisse 106. Des bras d'articulation des roulettes articulées 114 sont reliés à la platine 103 par des ressorts 122, représentés, en figure 1, sous la forme de petits vérins.

En position de repos, c'est-à-dire avant et jusqu'à la fin de l'introduction de la roue avant 121 dans le dispositif de maintien, les ressorts 122 sont en butée d'extension, de sorte que la roulette articulée 114 et la roulette fixe 113 maintiennent les alésages de la platine 103, dans lesquels passent les coulisses 106, parallèles à ces coulisses.

La platine 103 comporte deux bras 104 qui assurent aussi le guidage de la platine 103, en particulier pour éviter son coincement si elle se mettait de travers. L'un des bras 104 est équipé d'un galet 105.

On observe que l'épaisseur de la platine 103 est telle que tout basculement de cette platine 103 provoque son arc-boutement et la bloque sur les coulisses 106, si, conformément à la loi de l'arc-boutement, le point d'application de la force est suffisamment loin. L'arc-boutement a lieu lorsque le support arrière remonte suffisamment haut pour que son bras pousse le galet 105 vers le haut, provoquant alors l'enfoncement des ressorts et l'arc-boutement. L'arc-boutement du support avant 102 ainsi obtenu est maintenu si la roue avant 121 pousse sur le support avant (lors d'une accélération de la moto par exemple)

Dans le mode de réalisation illustré aux figures 1 à 3, cet arc-boutement ne peut avoir lieu que lorsque la force en question, exercée par la roue avant 121 sur le support en Vé avant 102, pousse de la gauche des figures vers la droite. En effet, dans ce cas seulement, la roulette articulée 114 s'efface en compressant les ressorts 122, laissant la platine 103 s'incliner vers la droite (par rotation dans le sens des aiguilles d'une montre, en figures 1 à 3) jusqu'à son arc-boutement. Ainsi, farc-boutement a lieu grâce à la remontée du bras 123 et est maintenu par la pression de la roue avant sur le support avant 102.

Selon une variante d'exécution, avec chaque coulisse coopèrent deux roulettes fixes 113 distantes l'une de l'autre et occupant de préférence une position supérieure sur ladite coulisses 106 et une roulette articulée 114 occupant une position inférieure sur ladite coulisse et sollicitée contre cette dernière par un organe élastique, les roulettes fixes et mobile étant portées par le support avant 102.

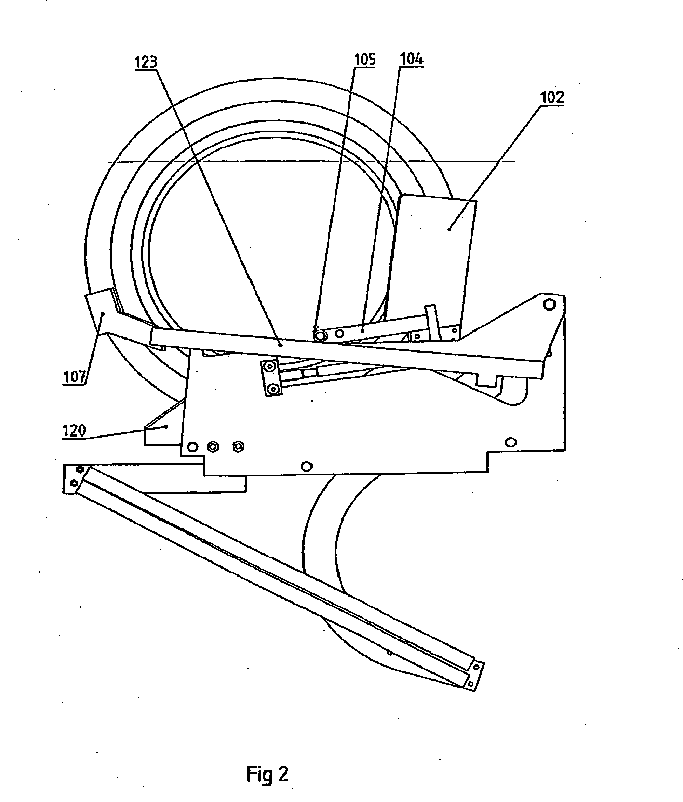

Le support arrière 107 est composé d'un support de section en Vé ouvert vers la roue avant 121, arrondi pour épouser la forme du pneu, qui est articulé sur le châssis 101 par deux grands bras 123 en rotation autour d'un axe de rotation 124 qui est en avant de la roue et, préférentiellement, au dessus du support 120 et en avant du support avant 102, même lorsque celui-ci a coulissé, à la fin de l'introduction de la roue avant dans le dispositif de maintien (figure 2).

Le support arrière 107 comporte, dans le mode de réalisation décrit, au moins un levier 108 qui sert de support pour accrocher deux ressorts 109 reliés au châssis par leurs autres extrémités, par l'intermédiaire d'une patte 110.

Un loquet de maintien (non représenté) du support arrière 107 est solidaire du châssis 101 et se bloque lors du retour vers l'arrière des parties mobiles pour maintenir en position basse le support arrière 107. Ce loquet est libéré sous l'effet du poids de la roue avant 121, lors de l'introduction de la roue dans le dispositif de maintien.

Le fonctionnement du dispositif est le suivant. Lorsque l'on roule la moto, vers l'avant, pour engager la roue avant 121 dans le dispositif de maintien, la roue avant 121 s'engage par dessus le support arrière 107, qui est alors en position basse (figure 1), et libère le loquet de maintien. L'opérateur continue d'avancer la moto et la roue avant, roulant dans le support en Vé 120, arrive alors en contact avec le support avant 102. Lorsque la moto continue à avancer, le pneu pousse sur le support avant 102, vers la droite des figures, mais les ressorts 122 sont prévus pour que la force de poussée du pneu sur le support 102 ne soit pas suffisante pour provoquer l'enfoncement des roulettes articulées 114. Le support avant 102 et la platine 103 coulissent donc vers la droite des figures, en roulant sur les roulettes 113 et 114. Au fur et à mesure de l'avancée de la roue avant 121 vers la droite des figures, le support arrière 107 commence à monter, mu par les ressorts 109 pour rester en permanence en contact avec le pneu de la roue avant 121.

Arrivé à un certain stade de remontée du support 107 à l'arrière de la roue 121, lors de l'avancement de la roue dans le support inférieur 120, (voir figures 2 et 3), le bras 123 du support arrière 107 arrive en contact avec le galet 105 solidaire du support avant 102. La force communiquée par le bras 123 de support arrière 107 au bras 104 du support avant 102 provoque le basculement (en figures 1 à 3, dans le sens horaire) de l'ensemble du support avant 102 et de la platine 103, les ressorts 122 étant prévus pour se comprimer sous l'effet de cette force. Ce basculement provoque farc-boutement du support avant 102 et de la platine 103 sur les coulisses 106, provoquant un arrêt de son mouvement.

En figures 2 et 3, le ressort 109, les roulettes 113 et 114 et leur support n'ont pas été représentés, pour augmenter la lisibilité de ces figures.

Ainsi, le dispositif de maintien de roue avant de moto comporte :
- le support inférieur 120 comportant un rail dans lequel la roue avant 121 est susceptible de rouler, une zone d'appui central étant ainsi créée entre la roue avant 121 et le support inférieur 120,
- le support avant 102 qui est adapté à reculer lorsque la roue avant 121 roule dans le support inférieur 121 et appuie sur le support avant 102, une zone d'appui avant étant ainsi créée entre le support avant 121 et la roue avant 121,
- le support arrière 107 qui est adapté à remonter en appui sur l'arrière de la roue avant 121 lorsque celle-ci roule dans le support inférieur 120, une zone d'appui arrière étant ainsi créée entre le support arrière 107 et la roue avant 121 et,
- un moyen de blocage adapté à bloquer le support avant 102 lorsque le support arrière 107 est remonté d'une hauteur prédéterminée.

Dans le mode réalisation décrit et représenté, le moyen de blocage est constitué du support avant 102, de la platine 103, du bras 104, du galet 105, des roulettes articulées 114 et des ressorts 122 et la hauteur prédéterminée dépend de la cinématique du support arrière 107 et de la position du galet 105.

En particulier, le support arrière 107 présente un axe de rotation 124 et une longueur adaptés à ce que, pour les diamètres de roue entre dix et vingt et un pouces, l'angle, par rapport à l'horizontale, de l'axe passant par le centre de la roue avant 121 et la zone d'appui arrière est inférieur à trente degrés.

Ainsi, la cinématique du mouvement du support arrière 107, la force des ressorts et le coefficient de frottement du pneu sur le support arrière 107 sont tels que le support arrière 107 reste coincé même lorsque la moto est tirée vers l'arrière brutalement, par exemple si le moteur se bloque ou si le frein arrière de la moto est actionné.

Pour déverrouiller le support arrière 10,7 et donc sortir la roue avant de son dispositif de maintien, il faut exercer une force supérieure à celle des ressorts 109 pour abaisser le support arrière 107. À cet effet, il peut être prévu un levier (non représenté) manoeuvrable par l'opérateur, par exemple.

En tirant en arrière sur la moto, la roue avant part vers la gauche des figures 1 à 3, le support avant 102 et la platine 103 sortant alors de la position arc-boutée (le galet 105 étant alors dégagé de l'appui du bras 123) et se mettent alors à rouler vers la gauche des figures, sous l'effet de leur poids. En poursuivant le désengagement de la roue avant 121 du dispositif de maintien, on provoque le blocage du loquet de maintien du support arrière 107, support qui reste ainsi en position basse.

Bien que, dans la description, on décrive un dispositif de maintien de roue avant dans lequel le support inférieur 120 et le support avant 102 sont mobiles, l'un par rapport à l'autre, la présente invention ne se limite pas à ce mode de réalisation particulier. Ainsi, en variante (non représentée), le support inférieur et le support avant sont solidaires et forment conjointement un "L" qui se déplace sur des rails et est bloqués dès que le support arrière a atteint une position prédéterminée.

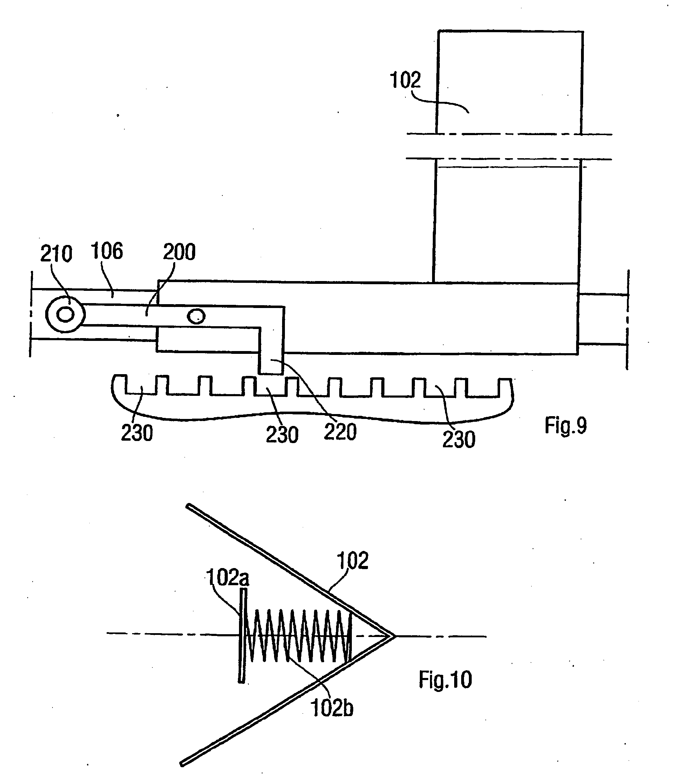

Selon une autre variante d'exécution du dispositif de maintien (Figure 9), le bras 104 et la platine 103 du support avant 102 sont guidés par les coulisses 106 sans possibilité de basculer par rapport aux dites coulisses 106 ce qui écarte toute possibilité d'arc-boutement. Au bras 104 est solidarisé un moyen de blocage du support 102 le long des coulisses 106, ce moyen de blocage étant actionné dans le sens du blocage par au moins l'un des bras 123 lorsque ce dernier atteint une position de remontée prédéterminée. Judicieusement ce moyen de blocage est constitué par un levier basculant 200 articulé au bras 104 portant à l'une de ses extrémités un élément 210 sur lequel une force de basculement est exercée par le bras 123 et à son autre extrémité au moins une forme de crochet 220 prévue pour être engagée sous l'effet du basculement du levier dans l'une au moins forme en creux 230 d'une série de formes en creux pratiquées soit dans le châssis 101 ou bien soit dans une platine fixée rigidement au châssis 101 et s'étendant parallèlement aux coulisses 106. Dans la forme préférée de réalisation, l'élément 210 sur lequel la force de basculement est exercée par le bras 123 est un galet monté fou sur un axe fixé rigidement au levier basculant

Le positionnement longitudinal de la moto et son blocage longitudinal sont faits des façons suivantes. Le dispositif de maintien de la roue avant de la moto étant monté sur rails fixes (non représenté), un ressort de faible force (non représenté) tend à s'opposer au déplacement du dispositif de maintien de la roue avant de la moto vers l'avant. Ainsi, le dispositif de maintien de la roue avant ne commence à avancer que lorsque la roue avant est verrouillée. Lorsque la roue avant est verrouillée dans le dispositif de maintien, l'opérateur continue à faire avancer la moto (en général il est resté dessus et avance par le moteur et la première vitesse engagée). Lorsque la roue arrière est peu derrière son emplacement visé, à la verticale de l'axe du rouleau, l'opérateur appuie sur une pédale (non représentée), ce qui provoque la remontée d'un doigt solidaire du dispositif de maintien de la roue avant. Ce doigt vient en appui sur la poutre avant du banc (par dessous) dans laquelle sont percés des trous (non représentés). Si le doigt est en face d'un trou, il y rentre ce qui immobilise le dispositif de maintien et la moto, selon l'axe longitudinal du banc de test. Si le doigt est entre deux trous, le système qui a fait remonter le doigt étant souple grâce à l'élasticité de l'acier qui le compose, le doigt exerce une pression de bas en haut sur la poutre. Puisque le doigt n'est pas engagé dans un trou, le dispositif de maintien continue son mouvement vers l'avant sous l'effet de la force exercée par la moto, jusqu'à ce que le doigt se trouve en face du trou et s'y engage, ce qui bloque le dispositif de maintien. La pédale sur laquelle a appuyé l'opérateur se verrouille par un loquet basculant (non représenté). Pour déverrouiller la moto, l'opérateur doit, du pied, pousser le loquet ce qui libère la pédale. Le doigt retombe et le dispositif de maintien peut reculer.

Pour voir la bonne position de la roue arrière sur le rouleau, l'opérateur peut soit regarder avec un miroir (non représenté), soit regarder un point lumineux projeté par une source lumineuse placée d'un côté de la roue arrière, jusqu'à ce qu'il disparaisse.

Pour réduire les force de frottement de la roue 121 dans le support avant 102, forces qui apparaissent lorsque la roue 121 tourne par rapport au support avant 102, les faces intrados dudit support 102 pourront être revêtues d'une matière à faible coefficient d'adhérence, mais selon une autre forme de réalisation, (Figure 10), le support en Vé 102 est doté, dans le volume défini par les faces intrados du vé, d'une plaque mobile 102a montée sur ressort 102b, contre laquelle prend d'abord appui la roue avant 123 lors de son engagement dans le support 102 et lors du mouvement du support 102 vers sa position de blocage. Cette plaque mobile 102a et son ressort associé 102b maintiennent ainsi le pneu de la roue 121 à écartement des faces intrados du support 102 tant que le support 102 n'a pas atteint sa position de blocage. Lorsque cette position est atteinte, la plaque mobile est repoussée vers le fond du Vé par la roue 121, sous l'effet du mouvement d'avance de la moto.

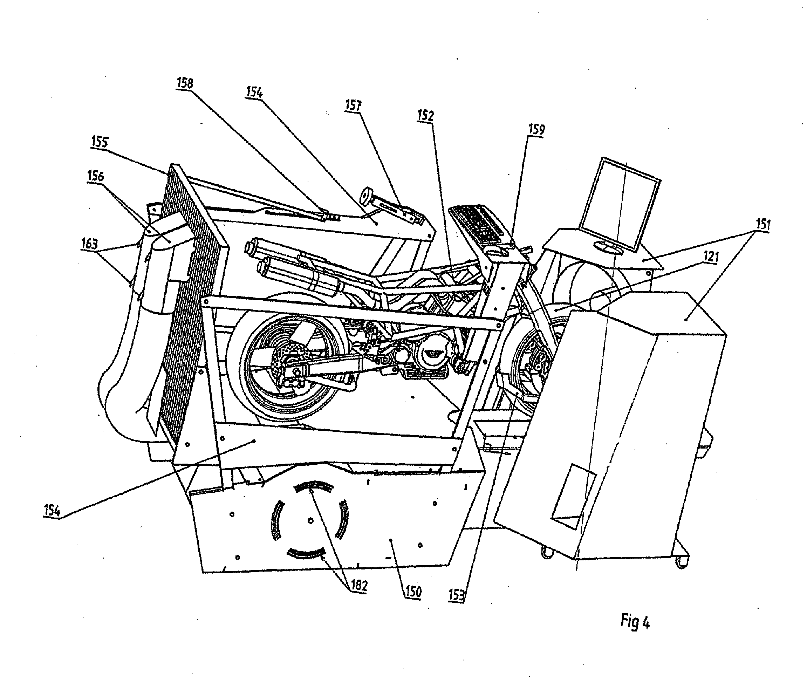

On observe, en figure 4, un banc de test de motos 150 comportant deux consoles de soufflerie 151, de part et d'autre de la roue avant 121 d'une moto 152, un dispositif de maintien de la roue avant 153, des barrières latérales 154 garde-corps et éléments de sécurité, une rampe d'accès 155 portant deux bouches d'extraction 156, une commande de frein 157 de rouleau de roulage de roue arrière, un moyen d'arrêt d'urgence 158 et un support de clavier et souris 159.

Le banc de test de moto 150 met en oeuvre de tout ou partie des différents aspects de la présente invention.

Les deux consoles de soufflerie 151, de part et d'autre de la roue avant 121 comportent des ventilateurs (non représentés) destinés à souffler de l'air frais sur le moteur et/ou le circuit de refroidissement de la moto 152. Ils comportent, éventuellement, des espaces destinés à recevoir l'unité centrale d'un ordinateur et des supports pour un écran d'ordinateur, un dispositif de pointage, par exemple un clavier et une souris informatique et/ou des affichages de systèmes de mesures additionnels (mesure de concentration de gaz dans les gaz d'échappement de la moto, par exemple) non représentés.

Le dispositif de maintien de la roue avant 153 est préférentiellement le dispositif de maintien illustré aux figures 1 à 3. Les barrières latérales 154 garde-corps et éléments de sécurité sont ici formés d'une structure métallique portant une vitre en verre ou en matériaux synthétiques transparents.

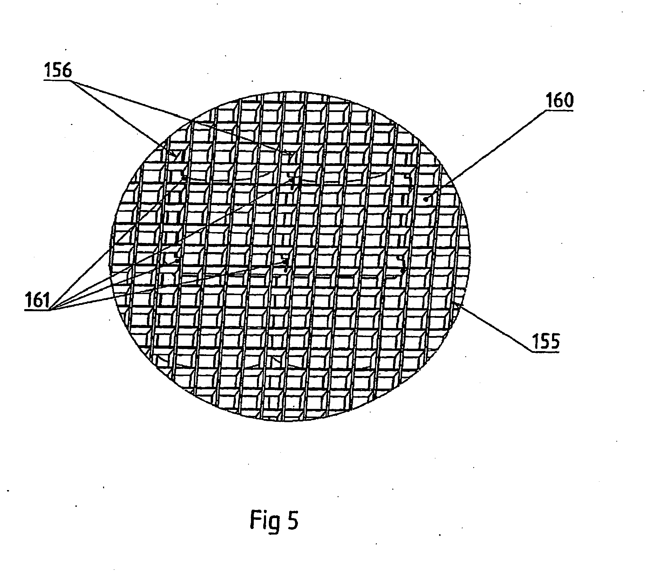

La rampe d'accès 155 qui est, ici, représentée en position haute, est montée en rotation pour se déplacer entre la position haute représentée et une position basse dans laquelle elle est en appui sur le sol, à l'une de ses extrémités, et en regard du rouleau de roulage, à son autre extrémité. Un détail de la rampe d'accès 155 est illustré en regard de la figure 5.

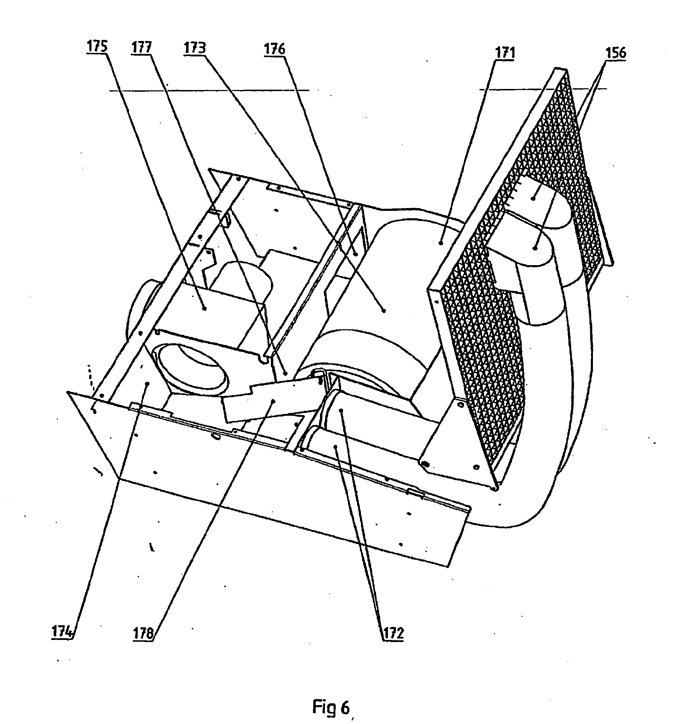

Chaque bouche d'extraction 156, portée par la rampe d'accès 155 est reliée, par l'intermédiaire d'un tuyau d'évacuation, à un extracteur de gaz, par exemple une turbine, comme illustré en regard de la figure 6.

La commande de frein 157 du rouleau de roulage de roue arrière est constituée d'un levier tiré en arrière par faction sur un volant relié à une vis faisant appui sur un point fixe du banc de test. Ce levier déplace des plaquettes d'un frein à friction, directement en appui sur la surface cylindrique externe du rouleau métallique. Pour pouvoir conserver une position de freinage entre deux tests, sans avoir à actionner le volant, l'ensemble de la commande de frein peut être désengagé de l'appui sur le point fixe du banc de test grâce à une crémaillère à deux positions correspondant respectivement à l'engagement sur le point fixe (position arrière) ou au désengagement (position avant). Ainsi, le frein à friction est commandé par l'opérateur à l'aide d'un petit volant accessible depuis la position de l'opérateur sur la moto en cours de test. Le frein à friction est ventilé comme illustré en figure 6.

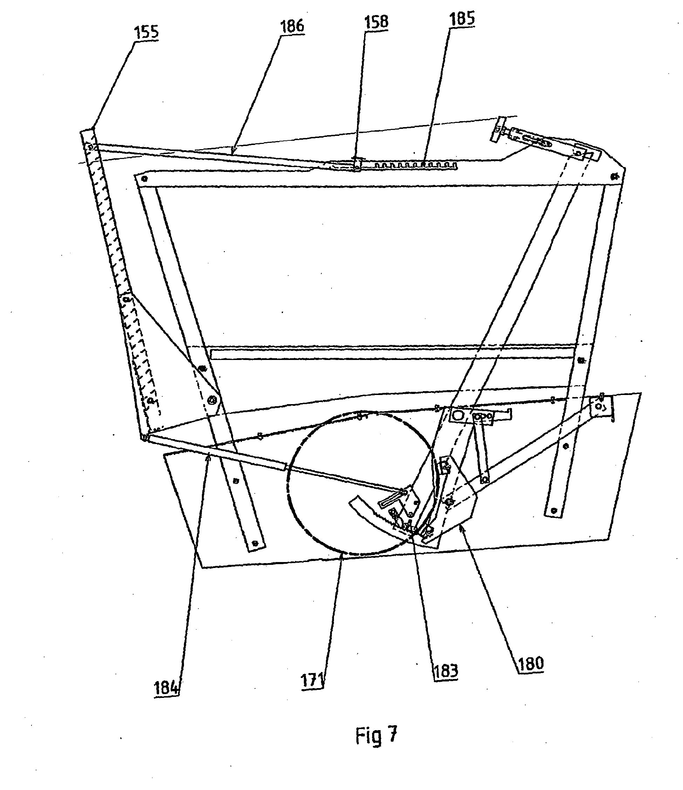

Le moyen d'arrêt d'urgence 158 est illustré en figure 7.

On observe, en figure 5, que la rampe d'accès mobile 155 est percée d'ouvertures 160 et que chaque bouche d'extraction 156 est munie d'au moins un support 161 adapté à s'enclencher dans au moins une ouverture 160 de la rampe d'accès pour recevoir les gaz d'échappement à travers de ladite ouverture 160.

Ainsi, chaque bouche d'extraction 156 peut être positionnée à l'arrière de la rampe d'accès mobile 155, ce qui lui permet de capter les gaz d'échappements des silencieux de moto les plus longs, car les extrémités de ceux-ci peuvent se situer très près de la rampe.

Dans le mode de réalisation représenté en figure 5, la rampe d'accès mobile 155 comporte une partie en caillebotis qui comporte les ouvertures 160 et chaque support 161 de bouche d'extraction est muni d'au moins un crochet avant 162 (ici quatre crochets) adaptés à s'accrocher audit caillebotis pour positionner la bouche d'extraction en arrière de la rampe d'accès 155 et d'au moins un crochet arrière 163 (ici deux crochets comme illustré en figure 4) adapté à s'accrocher audit caillebotis pour positionner la bouche d'extraction en avant de la rampe d'accès 155.

Ainsi, chaque bouche d'extraction 156 peut être positionnée en regard des silencieux, en tous points du caillebotis de la rampe d'accès, soit en avant soit en arrière de la rampe d'accès mobile 155, pour s'adapter à la longueur des silencieux de la moto testée.

Comme on le voit en figure 7, la rampe d'accès 155 est articulée autour d'un axe placé assez haut pour que les tuyaux 172 puissent passer en dessous de la rampe d'accès 155 lorsque les bouches d'extraction 156 sont placées en arrière de la rampe d'accès 155. Si les bouches sont placées en avant de la rampe d'accès, l'espace entre celle-ci, relevée comme illustré en figure 7, et le plancher du banc est suffisant pour laisser passer les tuyaux 172.

Dans le mode de réalisation décrit, le caillebotis comporte des plaquettes inclinées par rapport à la perpendiculaire au caillebotis de manière à ce que les gaz d'échappement traversant le caillebotis soient rabattus vers le sol.

En variante, à la place du caillebotis, la rampe d'accès comporte une partie en grillage (non représenté) et chaque bouche d'extraction est munie d'au moins un crochet adapté à s'accrocher audit - grillage.

On observe, en figure 6, dans une vue en perspective, un rouleau 171 de roulage de la roue arrière de la moto, un circuit de récupération de gaz d'échappement 172, un circuit de refroidissement 173 du rouleau 171, une chambre de mélange 174 des gaz d'échappement et de l'air de refroidissement du rouleau, placée en aval desdits circuits et un extracteur de gaz 175 qui extrait les gaz de la chambre de mélange de gaz 174.

Le circuit de récupération de gaz d'échappement 172 est relié à chaque bouche d'extraction 156, par des tuyaux préférentiellement souples sur toute leur longueur.

Ainsi, l'air de refroidissement du rouleau est frais et un seul extracteur permet d'extraire, simultanément, à la fois les gaz d'échappement et l'air de refroidissement, ce qui réduit les coûts et les risques de panne du banc de test.

Le circuit de refroidissement 173 comporte une première entrée d'air et une seconde entrée d'air respectivement 176 et 182 (voir figure 4 pour le repère 182) et une sortie d'air 177. L'entrée d'air 176 est positionnée d'un côté du rouleau, ici en avant du rouleau. L'entrée d'air 182 est positionnée dans l'axe du rouleau 171, qui est creux. La sortie d'air 177 est, angulairement éloignée de l'entrée d'air 176, par rapport au rouleau 171.

Cette disposition des entrées et sorties d'air augmente l'efficacité du circuit de refroidissement.

La chambre de mélange comporte un volet 178 constituant moyen de modulation pour faire varier le rapport des débits de gaz circulant dans les circuits de récupération de gaz 172 et de refroidissement 173. L'opérateur déplace le volet 178 en fonction des phases de test ou de mesures, par exemple de température du rouleau, qui lui sont affichées.

En variante, le moyen de modulation peut être placé en d'autres points de l'un de ces circuits. Par exemple, le moyen de modulation peut comporter un volet placé dans l'un des circuits de refroidissement ou de récupération.

Grâce à ce moyen de modulation, lorsque la moto émet beaucoup de gaz d'échappement, une grande quantité de gaz d'échappement peut être récupérée et lorsque la moto émet peu de gaz d'échappement, le refroidissement du rouleau peut être privilégié.

Préférentiellement, le banc de test comporte un moyen de commande du moyen de modulation en fonction de la vitesse de rotation du rouleau et/ou en fonction de l'accélération de la vitesse de rotation du rouleau et/ou en fonction de la position du frein du rouleau et/ou de l'effort fourni par la moto. Ce moyen de commande est décrit ci-après dans un mode de réalisation mécanique, d'autres modes de réalisation pouvant mettre en oeuvre des composants, par exemple capteurs et actionneurs, électriques ou électroniques.

On a vu, à la fin de la description des figures 1 à 3, que le dispositif de maintien de la roue avant de la moto était verrouillé en coulissement longitudinal sur le banc par l'engagement d'un doigt solidaire du dispositif de maintien, dans le châssis du banc de test. Pour la commande du moyen de modulation (ici le volet), la poutre du banc de test qui comporte des trous, dont l'un reçoit le doigt, est coulissante longitudinalement dans le banc de test, sur un ou deux centimètres, et est reliée au volet par un câble (non représenté). Le volet est tiré par un ressort (non représenté) pour tendre le câble. Lorsque la moto est au repos ou roule sans effort, le dispositif de maintien est tiré vers l'arrière puisque ce ressort le tire vers l'arrière. Le volet est alors dans une position telle qu'il obstrue l'aspiration des gaz d'échappement, par exemple à 90%, et libère l'aspiration d'air dans le circuit de refroidissement du rouleau. Lorsque la moto accélère ou fait un effort, sa poussée vainc le ressort qui retient la poutre à trous et le dispositif de maintien avance vers l'avant, autorisé en cela par la mobilité limitée de la poutre à trous. En avançant, la poutre tire le volet par le câble et ferme ainsi une bonne partie de l'orifice reliant le circuit de refroidissement du rouleau et la chambre de mélange, tout en ouvrant totalement les orifices d'aspiration vers les bouches d'extraction 156 du circuit d'extraction de gaz d'échappement. La poutre à trous arrive alors en butée.

L'extracteur de gaz 175 est, par exemple, constitué d'une turbine reliée à un tuyau d'évacuation destiné à déboucher à l'extérieur du bâtiment.

On observe, en figure 7, la rampe d'accès 155 de la moto, un frein 180 de rouleau 171 de roulage de la roue arrière de la moto, un lien mécanique 183 entre la rampe d'accès 155 et le frein 180 et un système de retenue 186 de la rampe d'accès 155 comportant un bouton d'arrêt d'urgence 158 adapté, lorsque le bouton d'arrêt d'urgence 182 est actionné, à libérer le système de retenue de la rampe d'accès.

Ainsi, lorsque le bouton d'arrêt d'urgence 158 est actionné, la rampe d'accès 155 n'est plus retenue par le système de retenue 186 et, sous l'action de son poids, la rampe d'accès 155 redescend et actionne le frein 180 du rouleau 171. En effet, le centre de gravité de la rampe d'accès 155 est placé en arrière de son axe de rotation, de ce fait elle se rabat lorsqu'elle est libérée.

Dans le mode de réalisation représenté, le lien mécanique 183 entre la rampe d'accès 155 et le frein 180 du rouleau 171 comporte un ressort à gaz 184. Ainsi, la force exercée par le frein est constante et déterminée par le ressort à gaz tout en permettant à la rampe d'accès 155 de redescendre lentement vers sa position d'appui sur le sol lorsque l'opérateur doit descendre la moto.

Dans le mode de réalisation représenté, le système de retenue de la rampe d'accès 155 comporte une crémaillère 185 dans laquelle est enclenché, en remontant, un bras 186 relié mécaniquement à la rampe d'accès 155.

On observe que la figure 7 représente le début du freinage provoqué par l'appui sur le bouton d'arrêt d'urgence 158. On observe aussi que la rampe d'accès mobile 155 ne peut pas redescendre au sol par la seule action sur le bouton d'arrêt d'urgence 158, grâce à la retenue exercée par l'extrémité arrière de la crémaillère 185 sur la partie du bras 186 qui y traverse la crémaillère 185. Ceci assure une sécurité complémentairé de l'opérateur.

Ainsi, l'arrêt d'urgence est simple et fiable : en appuyant sur le bouton d'arrêt d'urgence, l'opérateur désenclenche le bras 186 relié à la rampe d'accès 155, ce qui la libère et, sous l'effet de son poids, provoque le freinage du rouleau 171.

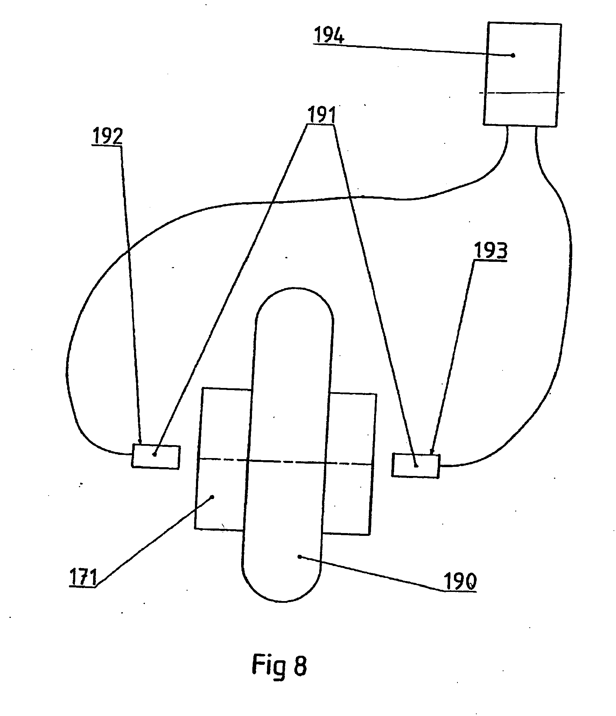

On observe, en figure 8, le rouleau 171, en vue de dessus, la coupe du pneu 190 de la roue arrière de la moto et un capteur 191 de déplacement latéral de la roue arrière. Pour déterminer si l'alignement des roues avant et arrière de la moto est correct, l'opérateur applique, sans quitter sa position assise sur la moto, une accélération du moteur de la moto et donc de la vitesse de rotation de la roue arrière de la moto, le capteur de déplacement latéral détectant un éventuel mouvement latéral indicatif d'un défaut d'alignement.

Dans le mode de réalisation, le capteur de déplacement latéral 191 de la roue arrière comporte deux capteurs électroniques 192 et 193 et un moyen 194 de mesure de différence entre les mesures effectuées par lesdits capteurs. Ainsi, le capteur de déplacement fournit une bonne précision de mesure, quelle que soit la largeur de la roue arrière ou de son pneu.

## Revendications

1. - Dispositif de maintien de roue avant de moto **caractérisé en ce qu'**il comporte :
- un support inférieur (120) pour constituer une zone d'appui central,
- un support avant (102) qui est adapté à reculer lorsque la roue avant (121) s'engage dans le dispositif et appuie sur le support avant (102), pour constituer une zone d'appui avant,
- un support arrière (107) qui est adapté à remonter en appui sur l'arrière de la roue (121) lorsque celle-ci s'engage dans le dispositif, pour constituer une zone d'appui amers et,
- un moyen de blocage adapté à bloquer le support avant lorsque le support arrière a atteint une position -prédéterminée.

2. - Dispositif selon la revendication 1, **caractérisé en ce que** le support inférieur (120), le support avant (102), le support arrière (107) et le moyen de blocage sont montés sur un châssis commun (101).

3. - Dispositif selon la revendication 1 ou la revendication 2, **caractérisé en ce que** le support avant (102) est monté en coulissement sur deux coulisses (106) de guidage.

4. - Dispositif selon la revendication 3, **caractérisé en ce que** le support avant (102) est doté d'une platine (103), fixée rigidement audit support, ledit support (102) étant monté en coulissement sur deux coulisses (106) de guidage par l'intermédiaire de ladite platine (103).

5. - Dispositif selon les revendications 3 et 4 prises ensemble, **caractérisé en ce que** les coulisses (106) sont solidaires du châssis.

6. - Dispositif selon la revendication 4 ou la revendication 5, **caractérisé en ce que** la platine (103) comporte deux bras de guidage (104) qui assurent aussi la guidage de la platine (103), l'un des bras de guidage (104) étant équipé d'un galet (105).

7. - Dispositif selon l'une quelconque des revendications précédentes, **caractérisé en ce que** le support amère (107) présente un axe de rotation et une longueur adaptés à ce que, pour les diamètres de roue entre dix et vingt et un pouces, lorsque la roue (121) est bloquée dans le dispositif, l'angle, par rapport à l'horizontale, de l'axe passant par le centre de la roue (121) et la zone d'appui arrière est inférieur à trente degrés.

8. - Dispositif selon la revendication 7, **caractérisé en ce que** le support arrière (107) est constitué d'un support de section en Vé ouvert vers la roue avant (121), qui est articulé sur le châssis (101) par deux bras (123) en rotation autour d'un axe de rotation (124) qui est en avant de la roue avant (121) et, au-dessus du support (120) et en avant du support avant (102).

9. - Dispositif selon la revendication 7, **caractérisé en ce que** le support arrière (107) comporte au moins un levier 108 qui sert de support pour accrocher deux ressorts (109) reliés au châssis par leurs autres extrémités, par l'intermédiaire d'une patte 110.

10. - Dispositif selon la revendication 9, **caractérisé en ce** par un loquet de maintien du support arrière (107) solidaire du châssis (101) lequel loquet se bloque lors du retour vers l'arrière des parties mobiles pour maintenir en position basse le support arrière (107), ledit loquet étant libéré sous l'effet du poids de la roue avant (121), lors de l'introduction de la roue dans ledit dispositif

11. - Dispositif selon l'une quelconque des revendications précédentes, **caractérisé en ce que** le moyen de blocage qui bloque le support avant comporte au moins une pièce (103) adaptée à se coincer en arc-boutement.

12. - Dispositif selon les revendications 6, 8, 11 prises ensemble **caractérisé en ce que** l'arc-boutement a lieu lorsque le support arrière (107) remonte suffisamment haut pour que l'un de ses bras (123), par action de poussée radiale vers le haut sur le galet (105), provoque le basculement de la platine (103).

13. - Dispositif selon la revendication 3 **caractérisé en ce que** le support avant (102) est guidé sur les coulisses (106) sans possibilité de basculer par rapport aux dites coulisses (106) afin d'éviter toute possibilité d'arc-boutement sur ces dernières, et qu'au dit support avant (102) est solidarisé un moyen de blocage le long des coulisses (106), ce moyen de blocage étant actionné dans le sens du blocage par le support arrière (107) lors de la remontée de ce dernier.

14. - Dispositif selon la revendication 13, **caractérisé en ce que** le moyen de blocage est constitué par un levier basculant (200) articulé au support avant (102) portant à l'une de ses extrémités un élément (210) sur lequel une force de basculement est exercée par le support arrière (107) et à son autre extrémité au moins une forme de crochet (220) prévue pour être engagée sous l'effet du basculement du levier (200) dans l'une an moins forme en creux (230) d'une série de formes en creux (230) pratiquées soit dans le châssis (101), soit dans une platine fixée rigidement au châssis (101) et s'étendant parallèlement aux coulisses (106).

15. - Dispositif selon la revendication 14, **caractérisé en ce que** l'élément (210) sur lequel la force de basculement est exercée par le support arrière (107) est un galet monté fou sur un axe fixé rigidement au levier basculant (200).

16. - Dispositif selon l'une quelconque des revendications précédentes, **caractérisé en ce que** le support avant, en Vé, (102) est doté, dans le volume défini par les faces intrados du vé, d'une plaque mobile (102a) montée sur ressort (102b), contre laquelle prend d'abord appui la roue avant (123) lors de son engagement dans le support (102) et lors du mouvement du support (102) vers sa position de blocage, ladite plaque mobile (102a) et le ressort associé (102b) assurant le maintien du pneu de la roue (121) à écartement des faces intrados du support (102) tant que ledit support (102) n'a pas atteint sa position de blocage.

17. - Banc de test (150) de moto (152), **caractérisé en ce qu'**il comporte un dispositif de maintien de roue avant de moto selon l'une quelconque des revendications 1 à 16.

18. - Banc de test selon la revendication 17, **caractérisé en ce qu'**il est doté d'au moins deux rails parallèles, fixes, horizontaux, sur lesquels est monté en coulissement le dispositif de maintien de la roue avant, un organe élastique tendant à s'opposer au déplacement du dit dispositif vers l'avant étant interposé entre le banc et ledit dispositif, de façon que ledit dispositif ne puisse se déplacer sur les rails qu'après verrouillage de la roue avant (121), le maintien dudit dispositif dans la position longitudinale appropriée étant assurée par un doigt mobile qui lui est solidaire et qui est manoeuvré par une pédale et qui est destiné, par action sur la pédale à venir se loger dans un trou formé dans un élément à trous que comporte le banc.

19. - Banc de test de motos selon la revendication 17 on la revendication 18, **caractérisé en ce qu'**il comporte une rampe d'accès mobile (155) percée d'ouvertures (160) et un support (161) de bouche d'extraction adapté à recevoir au moins une bouche d'extraction (156) en regard d'au moins une ouverture (160) de la rampe d'accès (155) pour recevoir les gaz d'échappement à travers de ladite ouverture lorsque la rampe (155) est relevée.

20. - Banc de test selon la revendication 19**caractérisé en ce que** la rampe d'accès (155) comporte une partie en caillebotis et chaque bouche d'extraction (156) est munie d'au moins un crochet adapté à s'accrocher audit caillebotis.

21. - Banc de test selon la revendication 20, **caractérisé en ce que** le caillebotis comporte des plaquettes inclinées par rapport à la perpendiculaire au caillebotis de manière à ce que les gaz d'échappement traversant le caillebotis soient rabattus vers le soL .

22. - Banc de test selon l'une quelconque des revendications 19 à 21, **caractérisé en ce que** chaque bouche d'extraction (156) comporte au moins un crochet (162) sur sa face avant et au moins un crochet (163) sur sa face arrière.

23. - Banc de test selon l'une quelconque des revendications 19 à 22, **caractérisé en ce qu'**il comporte:
un circuit (172) de récupération de gaz d'échappement,
- un circuit (173) de refroidissement d'un rouleau (171) de roulage de la roue arrière de la moto,
- une chambre de mélange (174) des gaz d'échappement et de l'air de refroidissement du rouleau (171) placé en aval desdits circuits et,
- un extracteur de gaz (175) adapté à extraire les gaz de la chambre de mélange de gaz (174).

24. - Banc de test selon la revendication 23, **caractérisé en ce que** le circuit de refroidissement (173) comporte une première entrée d'air, une seconde entrée d'air et une sortie d'air (177), que le rouleau (171) est creux, que l'une des entrée d'air est positionnée d'un côté du rouleau, que l'autre entrée d'air est positionnée dans l'axe du rouleau (171) et que la sortie d'air (177) est, angulairement, éloignée de la première entrée d'air, par rapport au rouleau (171).

25. - Banc de test selon l'une quelconque des revendications 23 ou 24, **caractérisé en ce qu'**il comporte un moyen de modulation adapté à faire varier le rapport des débits de gaz circulant dans les circuits de récupération de gaz (172) et de refroidissement (173) du rouleau (171).

26. - Banc de test selon la revendication 25, **caractérisé en ce que** le moyen de modulation comporte un volet (178) placé dans la chambre de mélange (174).

27. - Banc de test selon la revendication 25, **caractérisé en ce que** le moyen de modulation comporte un volet (178) placé dans l'un des circuits de gaz.

28. - Banc de test selon l'une quelconque des revendications 25 à 27, **caractérisé en ce qu'**il comporte un moyen de commande du moyen de modulation en fonction de la vitesse de rotation du rouleau et/ou en fonction de l'accélération de la vitesse de rotation du rouleau et/ou en fonction de la position du frein de rouleau et/ou de l'effort fourni par la moto.

29. - Banc de test selon la revendication 28, **caractérisé en ce que** le moyen de commande du moyen de modulation comprend :
- l'élément à trous, lequel est monté coulissant longitudinalement selon une course faible,
- un câble solidaire d'une part du volet et d'autre part de l'élément à trous et,
- un ressort de traction agissant sur le volet afin de tendre le câble et de solliciter ledit volet vers une position d'obturation totale ou quasi totale du circuit d'aspiration des gaz d'échappement, ladite position correspondant à une position d'ouverture totale quasi totale du circuit d'aspiration d'air dans le circuit de refroidissement.

30. - Banc de test selon l'une quelconque des revendications 17 à 29, **caractérisé en ce qu'**il comporte une rampe (155) d'accès de la moto, un frein (180) de rouleau (171) de roulage de la roue arrière de la moto, un lien mécanique (183) entre la rampe d'accès et le frein (180) et un système de retenue (186) de la rampe d'accès comportant un bouton (182) d'arrêt d'urgence adapté, lorsqu'il est actionné, à libérer le système de retenue (186) de la rampe, le centre de gravité de la rampe étant placé de telle manière qu'elle se rabat vers l'arrière lorsqu'elle est libérée, ladite rampe actionnant alors le frein (180) du rouleau (171).

31. - Banc de test selon la revendication 30, **caractérisé en ce que** le système de retenue (186) de la rampe d'accès comporte une crémaillère dans laquelle est enclenché, en remontant, un bras relié mécaniquement à la rampe d'accès.

32. - Banc de test selon l'une quelconque des revendications 17 à 31, **caractérisé en ce qu'**il comporte un capteur de déplacement latéral de la roue arrière.

33. - Banc de test selon la revendication 32, **caractérisé en ce que** le capteur de déplacement latéral (191) de la roue arrière comporte deux capteurs électroniques (192, 193) et un moyen (194) de mesure de différence entre les mesures effectuées par lesdits capteurs.

## Claims

1. A device for holding the front wheel of a motorcycle, **characterised in that** it comprises:
- a lower support (120) for constituting a central support zone,
- a forward support (102) designed to retract when the front wheel (121) engages in the device and bears on the front support (102) in order to constitute a forward support zone,
- a rear support (107) designed to go back in abutment on the rear of the wheel (121) when the latter engages in the device, in order to constitute a rear support zone, and
- locking means operable to lock the front support when the rear support has reached a predetermined position.

2. A device according to claim 1, **characterised in that** the lower support (120), the forward support (102), the rear support (107) and the locking means are mounted on a common frame (101).

3. A device according to claim 1 or claim 2, **characterised in that** the forward support (102) is mounted slidably on two guide slides (106).

4. A device according to claim 3, **characterised in that** the forward support (102) is provided with a plate (103), rigidly fixed to said support, said support (102) being slidably mounted on two guide slides (106) by means of said plate (103).

5. A device according to claims 3 and 4 taken together, **characterised in that** the slides (106) are secured to the frame.

6. A device according to claim 4 or claim 5, **characterised in that** the plate (103) comprises two guide arms (104) that also provide the guidance of the plate (103), one of the guide arms (104) being equipped with a roller (105).

7. A device according to any one of the preceding claims, **characterised in that** the rear support (107) has a rotation axis and a length designed so that, for wheel diameters between ten and twenty one inches, when the wheel (121) is locked in the device, the angle, with respect to the horizontal, of the axis passing through the centre of the wheel (121) and the rear support zone is less than thirty degrees.

8. A device according to claim 7, **characterised in that** the rear support (107) is formed as a support with a V-shaped cross section open towards the front wheel (121), which is articulated on the frame (101) by a means of two arms (123) rotating about a rotation axis (124) that is in front of the front wheel (121) and above the support (120) and in front of the forward support (102).

9. A device according to claim 7, **characterised in that** the rear support (107) comprises at least one lever (108) that serves as a support for attaching two springs (109) connected to the chassis by their other ends, by means of a lug (110).

10. A device according to claim 9, **characterised by** a latch holding the rear support (107) secured to the chassis (101), said latch being locked when the moving parts return towards the rear in order to hold the rear support (107) in the low position, said latch being released under the effect of the weight of the front wheel (121) when the wheel is introduced into said device.

11. A device according to any one of the preceding claims, **characterised in that** the locking means that locks the front support comprises at least one piece (103) designed to be wedged in a bracing fashion.

12. A device according to claims 6, 8, 11 taken together, **characterised in that** the bracing takes place when the rear support (107) rises sufficiently high for one of its arms (123), by upward radial thrust action on the roller (105), to cause the tilting of the plate (103).

13. A device according to claim 3, **characterised in that** the forward support (102) is guided on the slides (106) without the possibility of tilting with respect to said slides (106) in order to prevent any possibility of bracing on the latter, and **in that** said front support (102) is secured to locking means along the slides (106), this locking means being actuated in the direction of locking by the rear support (107) when the latter rises.

14. A device according to claim 13, **characterised in that** the locking means is formed by a tilting lever (200) articulated on the forward support (102) carrying at one of its ends an element (210) on which a tilting force is exerted by the rear support (107) and at its other end at least one hook shape (220) designed to be engaged under the effect of the tilting of the lever (200) in at least one hollow shape (230) in a series of hollow shapes (230) formed either in the frame (101) or in a plate rigidly fixed to the frame (101) and extending parallel to the slides (106).

15. A device according to claim 14, **characterised in that** the element (210) on which the tilting force is exerted by the rear support (107) is a roller mounted loosely on a spindle fixed rigidly to the tilting lever (200).

16. A device according to any one of the preceding claims, **characterised in that** the forward support (102), in a V, is provided, in the volume defined by the lower surfaces of the V, with a movable plate (102a) mounted on a spring (102b), against which first of all the front wheel (123) bears when it is engaged in the support (102) and when the support (102) moves towards its locking position, said movable plate (102a) and the associated spring (102b) holding the tyre of the wheel (121) separated from the lower faces of the support (102) as long as said support (102) has not reached its locking position.

17. A test bench (150) for a motorcycle (152), **characterised in that** it comprises a motorcycle front wheel holding device according to any one of claims 1 to 16.

18. A test bench according to claim 17, **characterised in that** it is provided with at least two parallel horizontal fixed rails on which the device for holding the front wheel is slidably mounted, an elastic member tending to oppose the movement of said device forwards being interposed between the bench and said device, so that said device can move on the rails only after locking of the front wheel (121), the holding of said device in the appropriate longitudinal position being provided by a movable finger that is secured to it and that is manoeuvred by a pedal and that is intended, by action on the pedal, to come to be housed in a hole formed in a holed element of the bench.

19. A motorcycle test bench according to claim 17 or claim 18, **characterised in that** it comprises a movable access ramp (155) with openings (160) and an extraction vent support (161) designed to receive at least one extraction vent (156) opposite at least one opening (160) in the access ramp (155) in order to receive the exhaust gases through said opening when the ramp (155) is raised.

20. A test bench according to claim 19, **characterised in that** the access ramp (155) comprises a grating part and each extraction vent (156) is provided with at least one hook arranged to hook on said grating.

21. A test bench according to claim 20, **characterised in that** the grating comprises tips inclined with respect to the perpendicular to the grating so that the exhaust gases passing through the grating are diverted towards the ground.

22. A test bench according to any one of claims 19 to 21, **characterised in that** each extraction nozzle (156) comprises at least one hook (162) on its front face and at least one hook (163) on its rear face.

23. A test bench according to any one of claims 19 to 22, **characterised in that** it comprises:
- an exhaust gas recovery circuit (172),
- a circuit (173) for cooling a roller (171) for rolling the rear wheel of the motorcycle,
- a chamber (174) for mixing the exhaust gases and the cooling air for the roller (171) placed downstream of said circuits, and
- a gas extractor (175) operable to extract the gases from the gas mixing chamber (174).

24. A test bench according to claim 23, **characterised in that** the cooling circuit (173) comprises a first air inlet, a second air inlet and a air outlet (177), **in that** the roller (171) is hollow, **in that** one of the air inlets is positioned on one side of the roller, **in that** the other inlet is positioned in line with the roller (171) and **in that** the air outlet (177) is, angularly, distant from the first air inlet, with respect to the roller (171).

25. A test bench according to either one of claims 23 or 24, **characterised in that** it comprises a modulation means operable to vary the ratio of the gas flows circulating in the gas recovery (172) and cooling (173) circuits of the roller (171).

26. A test bench according to claim 25, **characterised in that** the modulation means comprises a flap (178) placed in the mixing chamber (174).

27. A test bench according to claim 25, **characterised in that** the modulation means comprises a flap (178) placed in one of the gas circuits.

28. A test bench according to any one of claims 25 to 27, **characterised in that** it comprises means for controlling the modulation means according to the speed of rotation of the roller and/or according to the acceleration of the speed of rotation of the roller and/or according to the position of the brake for the roller and/or the force supplied by the motorcycle.

29. A test bench according to claim 28, **characterised in that** the means for controlling the modulation means comprises:
- the holed element, which is mounted so as to slide longitudinally along a short travel,
- a cable fixed on the one hand to the flap and on the other hand to the holed element, and
- a draw spring acting on the flap in order to tension the cable and to urge said flap towards a position of total or almost total closure of the exhaust gas suction circuit, said position corresponding to a position of almost total opening of the air suction circuit in the cooling circuit.

30. A test bench according to any one of claims 17 to 29, **characterised in that** it comprises a ramp (155) for access to the motorcycle, a brake (180) for a roller (171) for rolling the rear wheel of the motorcycle, a mechanical link (183) between the access ramp and the brake (180) and a system (186) for holding the access ramp comprising an emergency stop button (182) designed, when it is actuated, to release the system (186) holding the ramp, the centre of gravity of the ramp being placed so that it is folded towards the rear when it is released, said ramp then actuating the brake (180) of the roller (171).

31. A test bench according to claim 30, **characterised in that** the system (186) for holding the access ramp comprises a rack in which an arm mechanically connected to the access ramp is engaged, while rising.

32. A test bench according to any one of claims 17 to 31, **characterised in that** it comprises a sensor for the lateral movement of the rear wheel.

33. A test bench according to claim 32, **characterised in that** the sensor (191) for the lateral movement of the rear wheel comprises two electronic sensors (192, 193) and means (194) for measuring the difference between the measurements made by said sensors.

## Patentansprüche

1. Vorrichtung zum Halten eines Vorderrades eines Motorrades, **dadurch gekennzeichnet, dass** sie umfasst:
- eine untere Stütze (120), um eine zentrale Stützzone zu bilden,
- eine vordere Stütze (102), die dazu ausgeführt ist, sich einzuziehen, wenn das Vorderrad (121) in die Vorrichtung eingreift und auf die vordere Stütze (102) drückt, um eine vordere Stützzone zu bilden,
- eine hintere Stütze (107), die dazu ausgeführt ist, in Abstützung auf den hinteren Bereich des Rades (121) auszufahren, wenn dieses in die Vorrichtung eingreift, um eine hintere Stützzone zu bilden, und
- ein Feststellmittel, das dazu ausgeführt ist, die vordere Stütze festzustellen, wenn die hintere Stütze eine vorbestimmte Position erreicht hat.

2. Vorrichtung nach Anspruch 1, **dadurch gekennzeichnet, dass** die untere Stütze (120), die vordere Stütze (102), die hintere Stütze (107) und das Feststellmittel auf einem gemeinsamen Gestell (101) montiert sind.

3. Vorrichtung nach Anspruch 1 oder Anspruch 2, **dadurch gekennzeichnet, dass** die vordere Stütze (102) gleitend auf zwei Gleitführungen (106) montiert ist.

4. Vorrichtung nach Anspruch 3, **dadurch gekennzeichnet, dass** die vordere Stütze (102) mit einer Platte (103) versehen ist, die starr auf der Stütze befestigt ist, wobei die Stütze (102) gleitend auf zwei Gleitführungen (106) mit Hilfe der Platte (103) montiert ist.

5. Vorrichtung nach den Ansprüchen 3 und 4 gemeinsam, **dadurch gekennzeichnet, dass** die Gleitführungen (106) mit dem Gestell verbunden sind.

6. Vorrichtung nach Anspruch 4 oder Anspruch 5, **dadurch gekennzeichnet, dass** die Platte (103) zwei Führungsarme (104) umfasst, die auch die Führung der Platte (103) sicherstellen, wobei einer der Führungsarme (104) mit einer Rolle (105) versehen ist.

7. Vorrichtung nach einem der vorhergehenden Ansprüche, **dadurch gekennzeichnet, dass** die hintere Stütze (107) eine Drehachse und Länge aufweist, die derart gewählt sind, dass für die Raddurchmesser zwischen zehn und einundzwanzig Zoll, wenn das Rad (121) in der Vorrichtung festgestellt ist, der Winkel zur Horizontalen der durch das Zentrum des Rades (121) gehenden Achse und der hinteren Stützzone kleiner als dreißig Grad ist.

8. Vorrichtung nach Anspruch 7, **dadurch gekennzeichnet, dass** die hintere Stütze (107) von einer Stütze mit einem zum Vorderrad (121) offenen V-förmigen Querschnitt gebildet ist, die auf dem Gestell (101) mit zwei Armen (123) in Drehung um eine Drehachse (124) angeordnet ist, die vorne am Vorderrad (121) und über der Stütze (120) und vorne an der vorderen Stütze (102) ist.

9. Vorrichtung nach Anspruch 7, **dadurch gekennzeichnet, dass** die hintere Stütze (107) mindestens einen Hebel (108) umfasst, der dazu dient, zwei Federn (109), die mit dem Gestell mit ihren anderen Enden verbunden sind, mit Hilfe eines Befestigungseisens (110) zu verbinden.

10. Vorrichtung nach Anspruch 9, **gekennzeichnet durch** einen Fallriegel zum Halten der hinteren Stütze (107), die mit dem Gestell (101) verbunden ist, wobei sich der Fallriegel bei der Rückkehr der beweglichen Teile nach hinten feststellt, um die hintere Stütze (107) in der unteren Position zu halten, wobei der Fallriegel unter der Wirkung des Gewichts des Vorderrades (121) bei der Einführung des Rades in die Vorrichtung freigegeben wird.

11. Vorrichtung nach einem der vorhergehenden Ansprüche, **dadurch gekennzeichnet, dass** das Feststellmittel, das die vordere Stütze feststellt, mindestens einen Teil (103) umfasst, der dazu ausgeführt ist, sich zu verstreben.

12. Vorrichtung nach den Ansprüchen 6, 8 und 11, **dadurch gekennzeichnet, dass** das Verstreben stattfindet, wenn die hintere Stütze (107) wieder hoch genug ausgefahren ist, dass einer ihrer Arme (123) durch radiale Schubwirkung nach oben auf die Rolle (105) das Kippen der Platte (103) hervorruft.

13. Vorrichtung nach Anspruch 3, **dadurch gekennzeichnet, dass** die vordere Stütze (102) auf den Gleitschienen (106) ohne Möglichkeit des Kippens in Bezug zu den Gleitschienen (106) geführt wird, um jede Möglichkeit des Verstrebens auf diesen letztgenannten zu vermeiden, und dass mit der vorderen Stütze (102) ein Feststellmittel entlang der Gleitschienen (106) verbunden ist, wobei dieses Feststellmittel in Richtung des Feststellens durch die hintere Stütze (107) beim Hochfahren derselben betätigt wird.

14. Vorrichtung nach Anspruch 13, **dadurch gekennzeichnet, dass** das Feststellmittel von einem Kipphebel (200) gebildet ist, der an der vorderen Stütze (102) angelenkt ist, die an einem ihrer Enden ein Element (210) trägt, auf das eine Kippkraft von der hinteren Stütze (107) ausgeübt wird, und die an ihrem anderen Ende mindestens eine Hakenform (220) aufweist, die dazu vorgesehen ist, unter der Wirkung des Kippens des Hebels (200) in mindestens eine Hohlform (230) einer Reihe von Hohlformen (230) einzugreifen, die entweder im Gestell (101) oder in einer Platte vorgesehen sind, die fest am Gestell (101) befestigt ist und sich parallel zu den Gleitschienen (106) erstreckt.

15. Vorrichtung nach Anspruch 14, **dadurch gekennzeichnet, dass** das Element (210), auf das die Kippkraft von der hinteren Stütze (107) ausgeübt wird, eine Rolle ist, die frei auf einer starr am Kipphebel (200) befestigten Achse montiert ist.

16. Vorrichtung nach einem der vorhergehenden Ansprüche, **dadurch gekennzeichnet, dass** die vordere Stütze in V-Form (102) in dem von den Innenseiten des V definierten Volumen mit einer beweglichen Platte (102a) versehen ist, die auf einer Feder (102b) montiert ist, an der zuerst das Vorderrad (123) bei seinem Eingreifen in die Stütze (102) und bei der Bewegung der Stütze (102) in ihre Feststellposition zur Anlage gelangt, wobei die bewegliche Platte (102a) und die zugehörige Feder (102b) das Halten des Reifens des Rades (121) in einem Abstand zu den Innenseiten der Stütze (102) sicherstellen, so lange die Stütze (102) nicht ihre Feststellposition erreicht hat.

17. Testbank (150) für ein Motorrad (152), **dadurch gekennzeichnet, dass** sie eine Vorrichtung zum Halten des Vorderrades des Motorrades nach einem der Ansprüche 1 bis 16 umfasst.

18. Testbank nach Anspruch 17, **dadurch gekennzeichnet, dass** sie mit mindestens zwei parallelen, festen, horizontalen Schienen versehen ist, auf denen die Haltevorrichtung des Vorderrades gleitend montiert ist, wobei ein elastisches Element, das dazu neigt, sich der Verschiebung der Vorrichtung nach vorne entgegenzustellen, zwischen der Bank und der Vorrichtung angeordnet ist, so dass sich die Vorrichtung auf den Schienen erst nach Verriegelung des Vorderrades (121) verschieben kann, wobei das Halten der Vorrichtung in der entsprechenden Längsposition durch einen beweglichen Finger gesichert ist, der mit ihr verbunden ist und durch ein Pedal betätigt wird und dazu bestimmt ist, durch Betätigung des Pedals in einem Loch angeordnet zu werden, das in einem Lochelement ausgebildet ist, welches die Bank umfasst.

19. Testbank von Motoren nach Anspruch 17 oder Anspruch 18, **dadurch gekennzeichnet, dass** sie eine bewegliche Zugangsrampe (155), die mit Öffnungen (160) versehen ist, und eine Stütze (161) einer Entnahmeöffnung umfasst, die dazu ausgeführt ist, mindestens eine Entnahmeöffnung (156) gegenüber mindestens einer Öffnung (160) der Zugangsrampe (155) aufzunehmen, um die Auspuffgase durch die Öffnung aufzunehmen, wenn die Rampe (155) angehoben ist.

20. Testbank nach Anspruch 19 **dadurch gekennzeichnet, dass** die Zugangsrampe (155) einen Teil in Form eines Gitterrostes umfasst, und dass jede Entnahmeöffnung (156) mit mindestens einem Haken versehen ist, der dazu ausgeführt ist, sich am Gitterrost anzuhaken.

21. Testbank nach Anspruch 20, **dadurch gekennzeichnet, dass** der Gitterrost zur Senkrechten auf den Gitterrost geneigte Platten umfasst, so dass die den Gitterrost durchströmenden Auspuffgase zum Boden geleitet werden.

22. Testbank nach einem der Ansprüche 19 bis 21, **dadurch gekennzeichnet, dass** jede Entnahmeöffnung (156) mindestens einen Haken (162) auf ihrer Vorderseite und mindestens einen Haken (163) auf ihrer Rückseite umfasst.

23. Testbank nach einem der Ansprüche 19 bis 22, **dadurch gekennzeichnet, dass** sie umfasst:
- ein Rückgewinnungskreis (172) der Auspuffgase,
- ein Kühlkreis (173) einer Rollwalze (171) für das Hinterrad des Motorrades,
- eine Mischkammer (174) für die Auspuffgase und die Kühlluft der Walze (171), die stromabwärts zu den Schaltungen angeordnet ist, und
- ein Gasentnahmevorrichtung (175), die dazu ausgeführt ist, die Gase der Gasmischkammer (174) zu entnehmen.

24. Testbank nach Anspruch 23, **dadurch gekennzeichnet, dass** der Kühlkreis (173) einen ersten Lufteintritt, einen zweiten Lufteintritt und einen Luftaustritt (177) umfasst, dass die Walze (171) hohl ist, dass einer der Lufteintritte auf einer Seite der Walze angeordnet ist, dass der andere Lufteintritt in der Achse der Walze (171) angeordnet ist und dass der Luftaustritt (177) von dem ersten Lufteintritt in Bezug zur Walze (171) im Winkel entfernt ist.

25. Testbank nach einem der Ansprüche 23 oder 24, **dadurch gekennzeichnet, dass** sie ein Modulationsmittel umfasst, das dazu vorgesehen ist, das Verhältnis der in dem Gasrückgewinnungskreis (172) und dem Kühlkreis (173) der Walze (171) zirkulierenden Gasmengen zu variieren.

26. Testbank nach Anspruch 25, **dadurch gekennzeichnet, dass** das Modulationsmittel eine Klappe (178) umfasst, die in der Mischkammer (174) angeordnet ist.

27. Testbank nach Anspruch 25, **dadurch gekennzeichnet, dass** das Modulationsmittel eine Klappe (178) umfasst, die in einem der Gaskreise angeordnet ist.

28. Testbank nach einem der Ansprüche 25 bis 27, **dadurch gekennzeichnet, dass** sie ein Mittel zur Steuerung des Modulationsmittels in Abhängigkeit von der Drehgeschwindigkeit der Walze und/oder in Abhängigkeit von der Dreh-Beschleunigung der Walze und/oder in Abhängigkeit von der Position der Bremse der Walze und/oder der vom Motorrad gelieferten Kraft umfasst.

29. Testbank nach Anspruch 28, **dadurch gekennzeichnet, dass** das Mittel zur Steuerung des Modulationsmittels umfasst:
- das Lochelement, das längs gleitend auf einem kurzen Weg angeordnet ist,
- ein Kabel, das einerseits mit der Klappe und andererseits dem Lochelement verbunden ist, und
- eine Zugfeder, die auf die Klappe einwirkt, um das Kabel zu spannen und die Klappe in eine Position des völligen oder gleichsam völligen Verschlusses der Ansaugschaltung der Auspuffgase zu drücken, wobei diese Position einer völligen oder gleichsam völligen Öffnungsposition der Luft-Ansaugschaltung in dem Kühlkreis entspricht.

30. Testbank nach einem der Ansprüche 17 bis 29, **dadurch gekennzeichnet, dass** sie eine Zugangsrampe (155) für das Motorrad, eine Bremse (180) der Rollwalze (171) des Hinterrades des Motorrades, eine mechanische Verbindung (183) zwischen der Zugangsrampe und der Bremse (180) und ein Haltesystem (186) für die Zugangsrampe au-fweist, umfassend einen Notausschaltknopf (182), der, wenn er betätigt wird, dazu geeignet ist, das Haltesystem (186) der Rampe freizugeben, wobei der Schwerpunkt der Rampe derart angeordnet ist, dass sie sich nach hinten umlegt, wenn sie freigegeben wird, wobei die Rampe in diesem Fall die Bremse (180) der Walze (171) betätigt.

31. Testbank nach Anspruch 30, **dadurch gekennzeichnet, dass** das Haltesystem (186) der Zugangsrampe eine Zahnstange umfasst, in die beim Hochfahren ein Arm einrastet, der mechanisch mit der Zugangsrampe verbunden ist.

32. Testbank nach einem der Ansprüche 17 bis 31, **dadurch gekennzeichnet, dass** sie einen Sensor für die Seitenverschiebung des Hinterrades umfasst.

33. Testbank nach Anspruch 3 2, **dadurch gekennzeichnet, dass** der Sensor für die Seitenverschiebung (191) des Hinterrades zwei elektronische Sensoren (192, 193) und ein Mittel (194) zum Messen des Unterschiedes zwischen den von den Sensoren durchgeführten Messungen umfasst.
